# EUROPEAN PATENT SPECIFICATION

(11) **EP 0 507 612 B1**
(45) Date of publication and mention of the grant of the patent: **29.01.1997**
(21) Application number: 92302970.6
(22) Date of filing: 03.04.1992
(51) Int. Cl.: B60P 3/24

(54) **Road tanker**
Tankwagen
Camion-citerne

(30) Priority: 04.04.1991 AU 5434/91
(43) Date of publication of application: 07.10.1992
(60) Divisional application: 95119873.8
(73) Proprietor: HOCKNEY PTY LIMITED, Smithfield New South Wales 2164 (AU)
(72) Inventor: Dingle, Trevor, Bilpin New South Wales 2758 (AU)
(74) Representative: Senior, Alan Murray

(56) References cited:
- GB-A- 946 046
- GB-A- 1 527 799
- US-A- 2 091 731
- US-A- 3 131 949

## Description

This invention relates to tanks to transport liquid and more particularly but not exclusively to road tankers, according to the characteristics of the preamble of independent claim 1, and to a method of manufacturing such tanks according to the characteristics of the preamble of independent claim 7.

Road tankers have their vessels formed of an elongated shell which encloses a chamber to receive the liquid to be transported. Extending transverse of the chamber and welded to the internal surfaces of the shell, are dividers and baffles.

The above discussed vessel is formed by providing an aluminium sheet to form the bottom of the shell and welding to that two side panels. Initially, the baffles and/or dividers are held in position in a generally vertical orientation, but inverted. The bottom panel and side panels are then placed over the dividers and/or baffles and deformed to conform to the external peripheral profile of the baffles and/or dividers. This is achieved by pulling the side panels downward over the dividers and/or baffles. As the shell material deforms, it is welded in position to retain its deformed configuration.

To the above vessel adjacent the location where the dividers and/or baffles are welded to the shell, there is welded to the external surface of the shell, various mountings for the wheel assemblies and other apparatus.

It should be appreciated that when the above described vessel is being formed, the vessel is formed inverted and must subsequently be righted for completion.

The above discussed method of manufacturing a mobile tank suffers from several disadvantages including having to weld to the shell the above discussed mounting points. These extra welds can result in providing a vulnerable zone in the overall structure.

US-A-3 131 949 describes a tank comprising the features of the preamble of independent claim 1.

It is an aim of the present invention to overcome or substantially ameliorate the above disadvantages.

According to the present invention there is provided a tank to transport liquid, said tank comprising:
an elongated shell enclosing an elongated chambers to receive the liquid;
a plurality of walls extending transversely of said chamber at longitudinally spaced locations along the chamber
wherein each said wall comprises a peripheral edge portion abutting an internal surface of a floor portion of said shell, said floor portion of said shell being curved to conform to the profile of said wall
characterised by
flanges downwardly projecting from said walls, and projecting through transversely extending slots formed in said floor portion of said shell said flanges providing mounting means externally of said shell at longitudinally spaced locations along the shell.

Preferably the slots are arranged in pairs which are aligned transversely of the chamber, and each wall has a pair of flanges which project into or through an associated pair of slots.

The invention further provides a method of manufacturing a tank to transport liquids, said method comprising the steps of:
providing a sheet of aluminium material with a central elongated portion thereof being adapted to provide a floor portion of the tank;
providing a plurality of walls to be located internally of said tank;
locating said walls with respect to said floor portion (21) so that said walls are transversely arranged and longitudinally spaced;
deforming said sheet by pulling it around the peripheral edges of the walls so as to conform to the profile thereof;
securing said sheet to said walls;
characterised in that
prior to locating said walls with respect to said floor portion, said floor portion is provided with a plurality of transversely extending slots to receive downwardly projecting flanges provided on said walls;
said step of locating said walls with respect of said floor portion comprises placing said walls on said floor portion so that said flanges locate in said slots;
said step of deforming said sheet causes said flanges to project through said slots thereby to provide external mountings at longitudinally spaced locations along the tank.

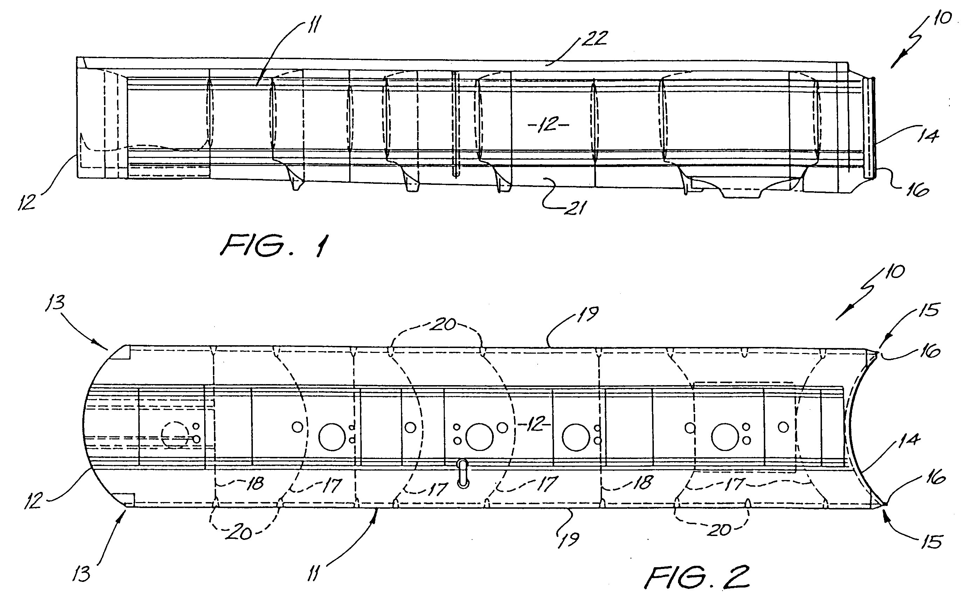

The present invention will be further described hereinafter by reference to the following description of an exemplary embodiment and the accompanying drawings wherein
Figure 1 is a schematic side elevation of a tank for a road tanker;
Figure 2 is a schematic top plan view of the tank of Figure 1;
Figure 3 is a schematic front elevation of a divider wall employed in the tank of Figure 1;
Figure 4 is a schematic top plan view of the divider wall of Figure 3;
Figure 5 is a schematic plan view of the sheet to form the tank floor;
Figure 6 is a schematic sectioned front elevation of one side of the tank of Figure 1;

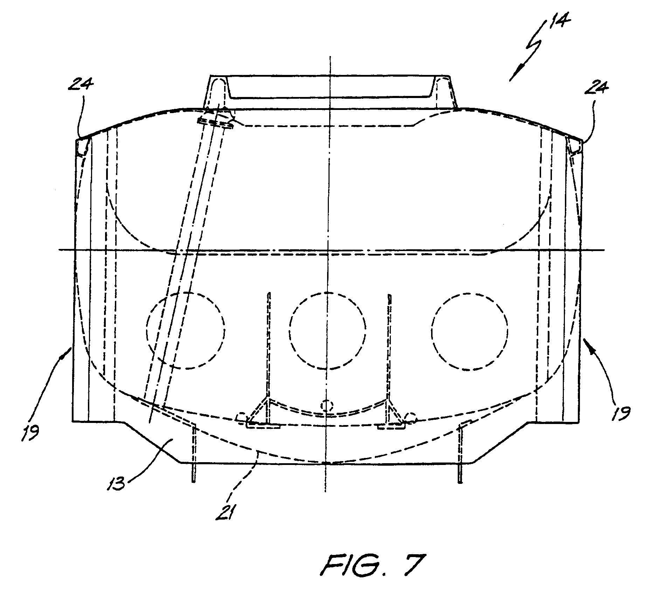

Figure 7 is a schematic rear elevation of the tank of Figure 1;

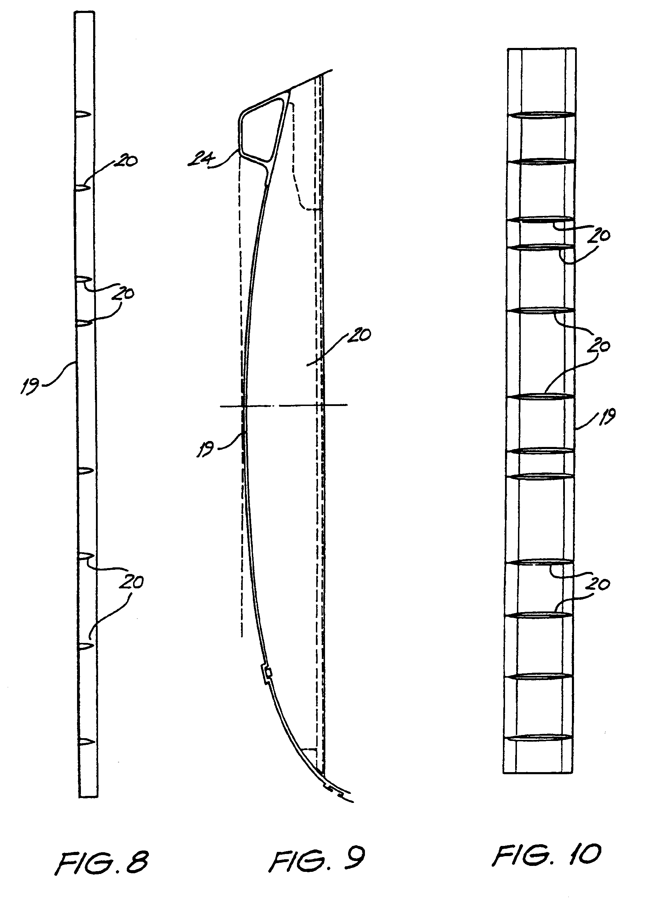

Figure 8 is a schematic sectioned side elevation of a side wall of the tank of Figure 1;
Figure 9 is a schematic sectioned end elevation of the side wall of Figure 8; and
Figure 10 is a schematic plan view of the side wall of Figure 8.

In the accompanying drawings there is schematically depicted a vessel 10 of a road tanker. The vessel 10 consists of a shell 11 encompassing a chamber 12 to receive a liquid to be transported.

The forward end of the vessel 10 is provided with a forward bulkhead 12 which is convex and which has adjacent its extremities a hollow section 13 which acts as a reinforcement in that area which aids in minimising damage to the vessel 10 should the forward corners of the shell 11 receive an impact. The rear bulkhead 14 is concave and extends at its extremities to hollow sections 15 which aid in reinforcing the rear extremities of the vessel 10 to aid it in resisting an impact in that area. The concave configuration of the bulkhead 14 also acts to minimise aerodynamic drag. Since the bulkhead 14 extends to vertically extending edges 16 it sheds vortices from these vertical edges 16.

Extending transversely across the chamber are dividers 17 and/or baffles 18. Each of these dividers 17 and baffles 18 is secured to a side panel 19 via mountings 20. Each mounting 20 is vertically extending and is of a generally "U-shaped" transverse cross section.

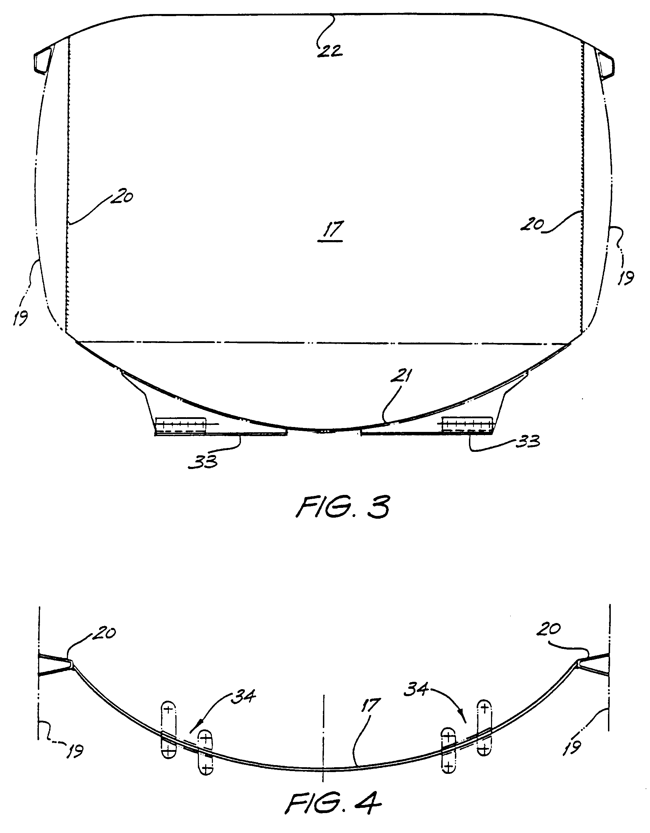

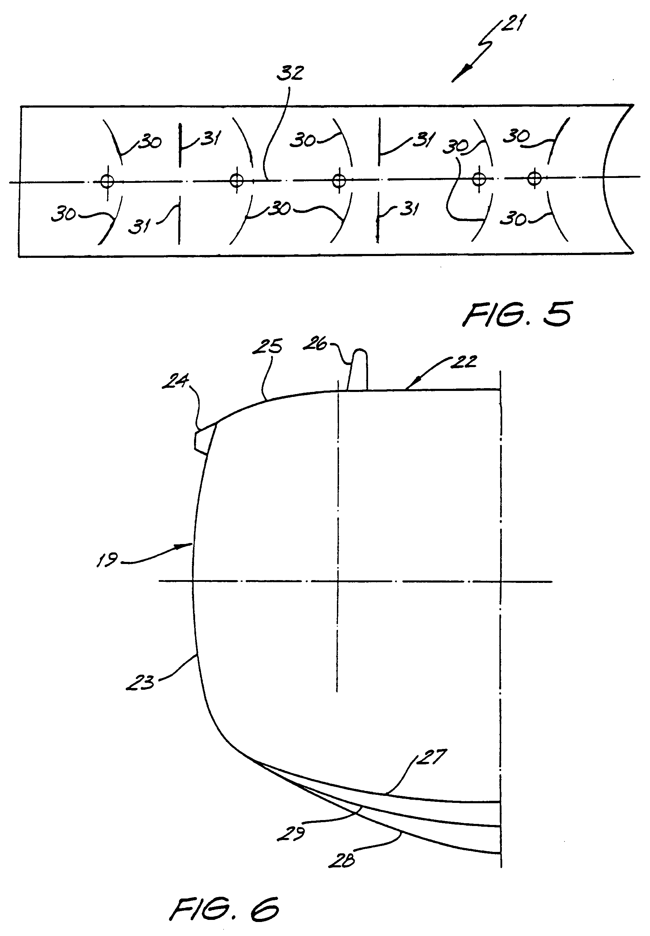

In Figures 3 and 4 there is schematically depicted one of the dividers 17.

The shell 11 consists of the side panels 19, a floor panel 21 and a roof panel 22.

Each side panel 19 consists of a sheet 23 joined at its upper end to a hollow section 24 which reinforces the upper edges of the tank 10 to again aid in strengthening the tank 10 against impact, particularly impact resulting from a rollover. The side panel 19 extends to an upper sheet 25 of the roof panel 22 which upper sheet 25 is also provided with a hollow section 26 again designed to aid in strengthening the tank 10 against an impact which may result from a rollover.

The sheet 23 is deformed adjacent its lower portions so as to follow the contour 27 at the forward end of the tank 10, and to follow the contour 28 adjacent the rear of the tank 10. The mean profile is illustrated by the contour 29. The contours 27, 28 and 29 are portions of a circle.

The floor panel 21 is formed from a flat sheet. The panel 21 is cut to provide transversely extending slots 30 which are generally arcuate. In Figure 5, the floor panel 21 is illustrated in its flat form prior to being deformed to its curved configuration in the formed vessel 10. The floor panel 21 is also provided with further slots 31 which also extend generally transverse of the longitudinal axis 32 of the floor panel 21. As best seen in Figure 5, the slots 30 and 31 are arranged in pairs extending transverse of the longitudinal axis 32.

Each of the side panels 19 is provided with a plurality of the mountings 20. Each of the dividers 17 and/or baffles 18 are welded to associated transversely aligned mountings 20.

Each of the dividers 17 and/or baffles 18 are provided with downwardly projecting pairs of flanges 33 which are intended to project through the pairs of slots 30 or 31. The flanges 33 provide mountings for wheel assemblies and other apparatus to be secured to the vessel 10. In Figures 3 and 4, the flanges 33 are illustrated as receiving adaptors 34 to adapt the flanges 34 to provide mountings for the wheel assemblies.

The above described tank is of an aluminium construction. In manufacturing the tank 10, the floor panel 21 is first welded to the pre-assembled side panels 19. Thereafter, the floor panel 21 is supported so as to assume its intended configuration. Thereafter, the dividers 17 and/or baffles 18 are placed in position so as to extend downwardly through their associated slots 30 or 31. The flanges 33 then project through the floor panel 21. While the dividers 17 and/or baffles 18 are held in position, the side panels 19 are pivotted upwardly to a position where the mountings 20 abut their associated divider 17 and/or baffle 18. While this process is taking place, the panels 19 and 21 are being welded in position. Thereafter, the roof panel 22 may be added or alternatively folded in position with the side panels 19. This operation may be conveniently performed by placing the unformed shell 11 in a sling.

It should be appreciated that the floor panel 21 is shaped to provide the tank 10 with an increasing transverse cross section toward the rear of the tank 10. This is achieved by having the floor panel 21, in its finishied profile, conforming generally to portions of three frusto-conical surfaces. The central portion of the floor panel 21 conforms basically to a frusto-conical surface which tapers rearwardly. The side portions of the panel 21 conform to frusto-conical surfaces which taper forwardly. By having the various portions of the floor 21 conform to various frusto-conical surfaces, the panel 21 can be deformed without buckling since it will bend about generally straight lines extending longitudinally of the panel 21.

## Claims

1. A tank (10) to transport liquid, said tank (10) comprising:
an elongated shell (11) enclosing an elongated chamber (12) to receive the liquid;
a plurality of walls (17,18) extending transversely of said chamber (12) at longitudinally spaced locations along the chamber (12)
wherein each said wall (17,18) comprises a peripheral edge portion abutting an internal surface of a floor portion of said shell, said floor portion (21) of said shell being curved to conform to the profile of said wall (17,18)
characterised in that
each said wall (17,18) further comprises downwardly projecting flanges, projecting through transversely aligned transversely extending slots (30,31) formed in said floor portion (21) of said shell (11) said flanges (33) providing mounting means externally of said shell (11) at longitudinally spaced locations along the shell (11).

2. The tank (10) of claim 1, wherein said slots (30) are arranged in pairs which are aligned transversely of the chamber (12), with each pair of slots (30, 31) being associated with a respective one of the walls (17, 18) and each wall (17, 18) has a pair of said flanges (33) which project into an associated pair of the slots (30, 31).

3. The tank (10) of claim 1 or 2, wherein the transverse cross-sectional area of said chamber (12) increases from a forward end of said tank (10), to a rear end of said tank (10).

4. The tank (10) of any preceding claim wherein a central section of said floor portion (21) generally conforms to a frusto-conical surface extending longitudinally of the tank (10) and having its longitudinal axis aligned longitudinally of the tank (10).

5. The tank (10) of claim 4 wherein the frusto-conical surface of said central section tapers away from said or a forward end.

6. The tank (10) of claim 5 wherein side sections of said floor portion (21) generally each conform to a frusto-conical surface extending longitudinally of the tank (10) and having its longitudinal axis aligned longitudinally of the tank wherein said frusto-conical surfaces of said side sections of said floor portion taper towards said foreward end.

7. A method of manufacturing a tank (10) to transport liquids, said method comprising the steps of:
providing a sheet of aluminium material with a central elongated portion thereof being adapted to provide a floor portion (21) of the tank (10);
providing a plurality of walls (17,18) to be located internally of said tank (10);
locating said walls with respect to said floor portion (21) so that said walls (17,18) are transversely arranged and longitudinally spaced;
deforming said sheet by pulling it around the peripheral edges of the walls (17,18) so as to conform to the profile thereof;
securing said sheet to said walls (17, 18);
characterised in that
prior to locating said walls (17,18) with respect to said floor portion (21), said floor portion (21) is provided with a plurality of transversely extending slots (30,31) to receive downwardly projecting flanges (30) provided on said walls;
said step of locating said walls with respect of said floor portion comprises placing said walls (17,18) on said floor portion (21) so that said flanges (33) locate in said slots (30,31);
said step of deforming said sheet causes said flanges (33) to project through said slots (30,31) thereby to provide external mountings at longitudinally spaced locations along the tank (10).

8. The method of claim 7, wherein said walls (17,18) are selected such that when said sheet is deformed by pulling it around the peripheral edges of the walls (17,18) said sheet deforms by bending about straight lines extending longitudinally of the tank (10).

9. The method of claim 8, wherein said straight lines follow frusto-conical surfaces, which frusto-conical surfaces have their longitudinal axes extending longitudinally of the tank (10).

10. The tank of any one of claims 1 to 6, wherein said tank further comprises a wheel assembly supporting said shell (12) via said flanges (13), wherein the flanges (13) provide mountings for said wheel assembly.

## Patentansprüche

1. Ein Tank (10) zum Transport von Flüssigkeit, wobei der Tank (10) umfaßt: ein längliches Gehäuse (11), das eine längliche Kammer (12) zur Aufnahme der Flüssigkeit umschließt; eine Vielzahl von Wänden (17, 18), die sich quer zu der Kammer (12) an in Längsrichtung beabstandeten Stellen entlang der Kammer (12) erstrecken, wobei jede Wand (17, 18) einen umfänglichen Kantenabschnitt umfaßt, der an eine innere Fläche eines Bodenabschnittes des Gehäuses anstößt, wobei der Bodenabschnitt (21) des Gehäuses in Anpassung an das Profil der Wand (17, 18) gekrümmt ist, dadurch gekennzeichnet, daß jede Wand (17, 18) ferner nach unten vorstehende Flansche umfaßt, die durch in Querrichtung ausgerichtete, sich in Querrichtung erstreckende Schlitze (30, 31) vorstehen, welche in dem Bodenabschnitt (21) des Gehäuses (11) ausgebildet sind, wobei die Flansche (33) äußerlich von dem Gehäuse (11) an in Längsrichtung beabstandeten Stellen entlang des Gehäuses (11) Befestigungsmittel vorsehen/schaffen.

2. Der Tank (10) nach Anspruch 1, dadurch gekenzeichnet, daß die Schlitze (30) in Paaren angeordnet sind, die quer zur Kammer (12) ausgerichtet sind, wobei jedes Paar von Schlitzen (30, 31) mit einer entsprechenden der Wände (17, 18) verbunden bzw. zu einer zugehörig ist, und jede Wand (17, 18) ein Paar von Flanschen (33) aufweist, die in ein zugehöriges Paar von Schlitzen (30, 31) ragen.

3. Der Tank (10) nach Anspruch 1 oder 2, dadurch gekennzeichnet, daß die Querschnittsfläche der Kammer (12) von einem vorderen Ende des Tanks (10) zu einem hinteren Ende des Tanks (10) ansteigt/sich vergrößert.

4. Der Tank (10) nach einem oder mehreren der vorhergehenden Ansprüche, dadurch gekennzeichnet, daß ein Mittelteil bzw. -abschnitt des Bodens (21) im wesentlichen mit einer abgestumpften Kegelfläche übereinstimmt, die sich in Längsrichtung des Tanks (10) erstreckt und deren Längsachse in Längsrichtung des Tanks (10) ausgerichtet ist.

5. Der Tank (10) nach Anspruch 4, dadurch gekennzeichnet, daß sich die abgestumpfte Kegelfläche des Mittelteils von dem oder einem vorderen Ende weg verjüngt.

6. Der Tank (10) nach Anspruch 5, dadurch gekennzeichnet, daß Seitenteile/-abschnitte des Bodenabschnittes (21) jeweils im wesentlichen mit einer abstumpften Kegelfläche übereinstimmen, die sich Längsrichtung des Tanks (10) erstreckt und deren Längsachse in Längsrichtung des Tanks ausgerichtet ist, wobei sich die abgestumpften Kegelflächen der Seitenteile des Bodenabschnittes zum vorderen Ende verjüngen.

7. Ein Verfahren zur Herstellung eines Tanks (10) zum Transport von Flüssigkeiten, wobei das Verfahren die Schritte umfaßt: Bereitstellen eines Bleches/einer Platte von Aluminium-material, von dem ein mittiger, länglicher Abschnitt zum Bereitstellen eines Bodenabschnittes (21) des Tanks (10) angepaßt ist; Bereitstellen einer Vielzahl von Wänden (17, 18), die im Inneren des Tanks (10) anzuordnen sind; Anordnen der Wände in Bezug zum Bodenabschnitt (21) so, daß die Wände (17, 18) in Querrichtung angeordnet und in Längsrichtung beabstandet sind; Verformen des Bleches, indem es um die Umfangskanten der Wände (17, 18) zur Anpassung an deren Profile herumgezogen wird; Befestigen des Bleches an den Wänden (17, 18); dadurch gekennzeichnet, daß vor dem Anordnen der Wände (17, 18) in Bezug zum Bodenabschnitt (21) der Bodenabschnitt (21) mit einer Vielzahl von sich in Querrichtung erstreckenden Schlitzen (30, 31) zur Aufnahme von an den Wänden vorgesehenen, nach unten vorstehenden Flanschen (30) versehen wird; der Schritt des Anordnens der Wände in Bezug zum Bodenabschnitt umfaßt, daß die Wände (17, 18) an dem Bodenabschnitt (21) so aufgestellt werden, daß die Flansche (33) in den Schlitzen (30, 31) aufgenommen werden; der Schritt des Verformens des Bleches die Flansche (33) veranlaßt, durch die Schlitze (30, 31) hindurchzuragen und dadurch äußere Befestigungsanschlüsse an in Längsrichtung beabstandeten Stellen entlang des Tanks (10) vorzusehen.

8. Das Verfahren nach Anspruch 7, dadurch gekennzeichnet, daß die Wände (17, 18) so ausgewählt sind, daß, wenn das Blech durch Ziehen um die Umfangskanten der Wände (17, 18) verformt wird, sich das Blech durch Biegen um gerade Linien, die sich in Längsrichtung des Tanks (10) erstrecken, gebogen wird.

9. Das Verfahren nach Anspruch 8, dadurch gekennzeichnet, daß die geraden Linien abgestumpften Kegelflächen folgen, wobei diese abgestumpften Kegelflächen sich mit ihren Längsachsen in Längsrichtung des Tanks (10) erstrecken.

10. Der Tank nach einem oder mehreren der Ansprüche 1 bis 6, dadurch gekennzeichnet, daß der Tank ferner einen Radaufbau/eine Radbaugruppe umfaßt, die das Gehäuse (12) über die Flansche (13, (33)) stützt, wobei die Flansche (13, (33)) Befestigungsanschlüsse für den Radaufbau vorsehen.

## Revendications

1. Citerne (10) destinée à transporter un liquide, ladite citerne (10) comprenant :
une coque allongée (11) renfermant une chambre allongée (12) pour recevoir le liquide ;
une pluralité de cloisons (17, 18) s'étendant transversalement à ladite chambre (12) dans des positions espacées dans la direction longitudinale sur la longueur de la chambre (12),
dans lequel chacune desdites cloisons (17, 18) comprend une portion de bord périphérique en appui contre une surface intérieure d'une portion de plancher de ladite coque, ladite portion de plancher (21) de ladite coque étant incurvée pour épouser le profil de ladite cloison (17, 18),
caractérisée en ce que
chacune desdites cloisons (17, 18) comprend en outre des pattes en saillie vers le bas qui font saillie à travers des fentes (30, 31) alignées transversalement, s'étendant transversalement, formées dans ladite portion de plancher (21) de ladite coque (11), lesdites pattes (33) fournissant des moyens de montage à l'extérieur de ladite coque (11) en des positions espacées dans la direction longitudinale sur la longueur de ladite coque (11).

2. Citerne (10) selon la revendication 1, dans laquelle lesdites fentes (30) sont disposées en paires qui sont alignées dans la direction transversale de la chambre (12), chaque paire de fentes (30, 31) étant associée à une cloison (17, 18) qui lui correspond respectivement, et chaque cloison (17, 18) présente une paire desdites pattes (33) qui s'enfoncent dans une paire correspondante de fentes (30, 31) qui lui est associée.

3. Citerne (10) selon la revendication 1 ou 2, dans laquelle l'aire de section transversale de ladite chambre (12) croît d'une extrémité avant de ladite citerne (10) vers une extrémité arrière de ladite citerne (10).

4. Citerne (10) selon une quelconque des revendications précédentes, dans laquelle une section centrale de ladite portion de plancher (21) se conforme sensiblement à une surface tronconique qui s'étend dans la direction longitudinale de la citerne (10) et qui présente son axe longitudinal aligné dans la direction longitudinale de ladite citerne (10).

5. Citerne (10) selon la revendication 4, dans laquelle la surface tronconique de ladite section centrale est à pente en partant de ladite extrémité avant ou d'une extrémité avant.

6. Citerne (10) selon la revendication 5, dans laquelle des sections latérales de ladite portion de plancher (21) se conforment sensiblement chacune à une surface tronconique qui s'étend dans la direction longitudinale de la citerne (10), et qui présente son axe longitudinal aligné dans la direction longitudinale de la citerne, et dans laquelle lesdites surfaces tronconiques desdites sections latérales de ladite portion de plancher sont à pente vers ladite extrémité avant.

7. Procédé de fabrication d'une citerne (10) destinée à transporter des liquides, ledit procédé comprenant les phases consistant à :
préparer une feuille de matière d'aluminium dont une portion allongée centrale est adaptée pour former une portion de plancher (21) de la citerne (10) ;
préparer une pluralité de cloisons (17, 18) destinées à être placées à l'intérieur de ladite citerne (10) ;
placer lesdites cloisons en position par rapport à ladite portion de plancher (21) de telle manière que lesdites cloisons (17, 18) soient disposées transversalement et espacées longitudinalement ;
déformer ladite feuille en la tirant autour des bords périphériques des cloisons (17, 18) de manière qu'elle se conforme à leur profil ;
fixer ladite feuille auxdites cloisons (17, 18) ;
caractérisé
en ce qu'avant de placer lesdites cloisons (18) en position par rapport à ladite portion de plancher (21), on munit ladite portion de plancher (21) d'une pluralité de fentes (30, 31) s'étendant transversalement pour recevoir des pattes (30) en saillie vers le bas prévues sur lesdites cloisons ;
ladite phase consistant à placer lesdites cloisons en position par rapport à ladite portion de plancher consiste à placer lesdites cloisons (17, 18) sur ladite portion de plancher (21) de telle manière que lesdites pattes (33) se logent dans lesdites fentes (30, 31) ;
ladite phase consistant à déformer ladite feuille amène lesdites pattes (33) à faire saillie à travers lesdites fentes (30, 31) pour fournir ainsi des moyens de montage extérieurs en des endroits espacés longitudinalement sur la longueur de la citerne (10).

8. Procédé selon la revendication 7, dans lequel lesdites cloisons (17, 18) sont choisies de telle manière que, lorsqu'on déforme ladite feuille en la tirant autour des bords périphériques des cloisons (17, 18), ladite feuille se déforme en s'incurvant autour de lignes droites qui s'étendent dans la direction longitudinale de la citerne (10).

9. Procédé selon la revendication 8, dans lequel lesdites lignes droites suivent des surfaces tronconiques, lesquelles surfaces tronconiques ont leurs axes longitudinaux orientés dans la direction longitudinale de la citerne (10).

10. Citerne selon une quelconque des revendications 1 à 6, dans laquelle ladite citerne comprend en outre un ensemble de roues qui supportent ladite coque (12) par l'intermédiaire desdites pattes (13), lesdites pattes (13) formant des moyens de montage pour ledit ensemble de roues.
